# EUROPEAN PATENT APPLICATION

(11) **EP 2 199 025 A1**
(43) Date of publication of application: **23.06.2010**
(21) Application number: 08291212.2
(22) Date of filing: 18.12.2008
(51) Int. Cl.: B25B 29/02, F16C 35/063

(54) **Hydraulic nut**

(71) Applicant: SNR Roulements, 74000 Annecy (FR)
(72) Inventor: Eicke, Marc, 32139 Spenge (DE); Sommer, Martin, 32051 Herford (DE)
(74) Representative: Novagraaf Technologies

(57) **Abstract**

The invention concerns a hydraulic nut for mounting a preloaded bearing on an adapter sleeve. This hydraulic nut comprises a ring body (1) provided with an annular groove (2) in one end face, an hydraulic inlet (3) and attaching means (4) for fixedly attaching the ring body (1) to the elongated member, and an annular piston (5) received in the annular groove (2) for forming a pressure chamber (6) between the annular groove (2) and the annular piston (5), the annular piston being movable between a retracted position and an extended position protruding from the end face of the ring body (1), the hydraulic inlet (3) being in fluid communication with the pressure chamber (6), enabling the introduction of pressure fluid into the pressure chamber (6), thereby urging the annular piston (2) axially outwards. The hydraulic nut further comprises a return means (7) connected to the ring body (1) and to the annular piston (5) wherein the return means comprises at least one elastic member (10) for storing elastic potential energy when the annular piston is moved towards the extended position and for urging the annular piston (5) back towards the retracted position.

## Description

### TECHNICAL FIELD OF THE INVENTION

The present invention relates to a hydraulic nut for mounting a ring member, in particular the inner ring of a bearing on a shaft or adapter sleeve.

### BACKGROUND ART

Conventionally, such hydraulic nuts comprise an internal threaded ring body one end face of which is provided with a circular groove receiving an annular piston. The hydraulic nut can be screwed on the threaded end of an adapter sleeve with the annular piston fully retracted into the circular groove until the outward end of the piston, which slightly protrudes from the circular groove, abuts against a bearing ring member which is to be mounted on an adapter sleeve. The ring body of the hydraulic nut is provided with a pressure inlet communicating with the circular groove. When pressure fluid is applied to the circular groove through the inlet, the annular piston is moved axially outwards and applies an axial force to the ring member for mounting the ring member on the adapter sleeve by press fit. Such a mounting process is for example disclosed in EP0878271.

Such a hydraulic nut is very useful for achieving the correct mounting force. The bearing ring should be pushed hard enough along the adapter sleeve to get a reasonable press fit, otherwise the bearing may become loose during operation.

However, once the bearing ring has been mounted on the shaft, the piston must be retracted into its initial position for removing the hydraulic nut. This removal is difficult and time consuming due to the pressure with which the piston has previously pushed on the bearing. Currently, all available hydraulic nuts have to be brought back by hand into the initial position. During this operation, high forces have to be applied with a risk of damage of the hydraulic nut or of the bearing.

### SUMMARY OF THE INVENTION

One object of the invention is to propose a hydraulic nut which can be dismounted easily and without risk of damage after the mounting of bearings on an adapter sleeve. Another object of the invention is to reduce the mounting time of a ring on an elongated member by press fit and to insure a safe handling of the complete operation.

More precisely, and according to a first aspect of the present invention, a hydraulic nut is provided for mounting and dismounting a ring member on a elongated member, the hydraulic nut comprising:
- a ring body provided with an annular groove in one end face, an hydraulic inlet and attaching means for fixedly attaching the ring body to the elongated member,
- an annular piston received in the annular groove for forming a pressure chamber between the annular groove and the annular piston, the annular piston being movable between a retracted position and an extended position protruding from the end face of the ring body,
the hydraulic inlet being in fluid communication with the pressure chamber, enabling the introduction of pressure fluid into the pressure chamber, thereby urging the annular piston axially outwards,
the hydraulic nut being remarkable in that it further comprises a return means connected to the ring body and to the annular piston wherein the return means comprises at least one elastic member for storing elastic potential energy when the annular piston is moved towards the extended position and for urging the annular piston back towards the retracted position.

The return means applies an axial inward return force on the annular piston, such that the piston is urged back in the retracted position inside the groove as soon as the pressure applied to the pressure chamber is released. Obviously, the stiffness of the elastic member or members is chosen such that it enables full retraction of the piston in the retracted position but does not substantially impede the outward motion of the piston when the pressure chamber is pressurized. Once the piston is retracted, the force applied to the attaching means is considerably reduced and the hydraulic nut can easily be removed.

According to one embodiment, the return means may comprise a traction spring comprising one end connected to the annular piston and the other end connected to the ring body. In this embodiment, the traction spring is movable between an extended and a compressed position. The traction spring is in the extended position when the annular piston is urged outwardly, so that the traction spring applies an axial inward force on the annular piston when the annular piston is urged outwardly. The traction spring is an easy, unexpensive way of facilitating the hydraulic nut withdrawal into the annular groove.

The ring body may further comprise a through-hole provided with a first shoulder, the return means comprising at least one bolt surrounded with a compression spring, the bolt having a head and a pin, the pin being connected to the annular piston so that the bolt moves with the annular piston, the compression spring and the bolt being arranged so that, when the annular piston is urged outwardly, the compression spring being compressed between the first shoulder and the bolt head. In this embodiment, the compression spring is movable between an extended and a compressed position, the compression spring being in the compressed position when the annular piston is urged outwardly, so that, when the annular piston is outside of the annular groove, the compression spring applies an axial inward force on the annular piston which tends to urge the annular piston into the annular groove.

Advantageously, the through-hole may further comprise a second shoulder for stopping the bolt head or more precisely for stopping the stroke of the bolt head to prevent damage of the compression spring.

According to a preferred embodiment, the hydraulic nut may include a plurality of return means in order to improve the distribution of return forces on the annular piston.

According to a preferred embodiment of the invention, the ring body is provided with knurl. The knurling on the surface of the ring body of the hydraulic nut alleviates the handling operations.

In order to achieve safer handling operation during the mounting process, the outer surface of the ring body is equipped with a double knurl.

Advantageously, the ring body surface may be nitro-carbonized in order to achieve a better slide and corrosion protection. Another advantage of this process is to avoid any scratches, due to the hardened surface.

According to a preferred embodiment of the invention, the means for fixedly attaching the ring body to the elongated member comprises a thread on the internal surface of the ring body.

This hydraulic nut is particularly useful for mounting a spherical roller bearing with a tapered bore via an adapter sleeve, but it can be used for mounting any type of ring member on any elongated body.

### BRIEF DESCRPITION OF THE DRAWINGS

Other advantages and features of the invention will become more apparent from the following description of specific embodiments of the invention given as non-restrictive examples only and represented in the accompanying drawings in which:
- Figure 1 is a perspective view of a hydraulic nut according to a first embodiment of the present invention, the hydraulic nut comprising a ring body with an annular groove and a annular piston;
- Figure 2 is a front view of the hydraulic nut of figure 1;
- Figure 3 is a sectional view of the hydraulic nut of figure 1, wherein the annular piston is in the annular groove;
- Figure 4 is a sectional view of the hydraulic nut of figure 1, wherein the annular piston is urged outwardly.

### DETAILED DESCRIPTION OF PREFERED EMBODIMENTS

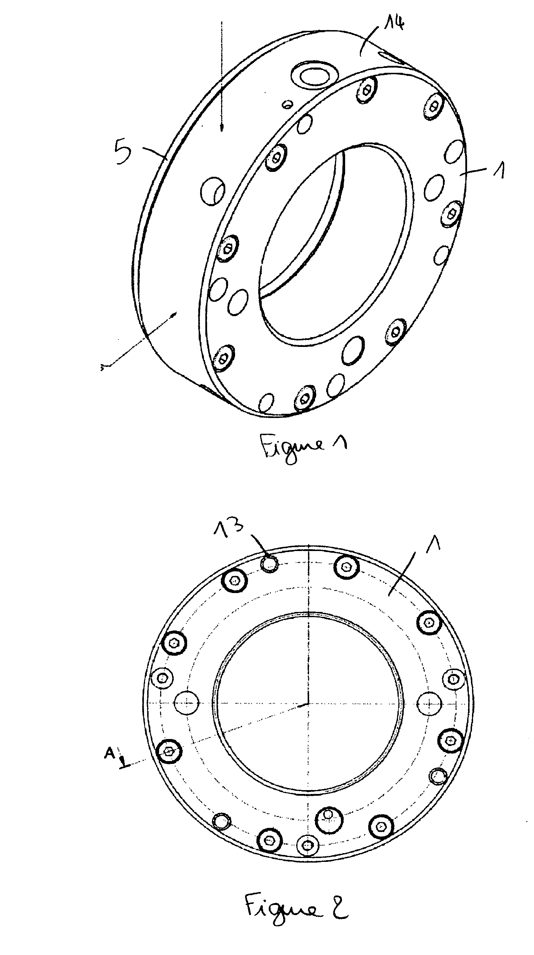

One hydraulic nut according to the invention will be further described with reference to figures 1 to 4.

This hydraulic nut comprises a ring body 1 having one end face provided with an annular groove 2 connected to an hydraulic inlet 3 and an internal face provided with a thread 4 for fixedly attaching the ring body to an elongated body. The hydraulic nut further comprises an annular piston 5 which is inserted in the annular groove 2 for forming a pressure chamber 6 between the annular groove 2 and the annular piston 5. The pressure chamber 6 is in fluid communication with the hydraulic inlet 3 so that, when some fluid is introduced in the pressure chamber 6 through the hydraulic inlet 3, the annular piston 5 is pushed outwards by the fluid. A pair of O-rings 5A, 5B are provided between the piston and the walls of the annular groove to seal the pressure chamber.

The hydraulic nut further comprises at least two return means 7 connected to the ring body 1 and to the annular piston 5 so that each return means 7 applies an axial inward return force on the annular piston 5 when the annular piston is urged outwardly.

Preferably, the two return means are located at 180° from one other.

Preferably, the return means are arranged circular around the nut and the hydraulic nut comprises at least three return means to get the piston back in the annular groove. In this embodiment, the hydraulic nut comprises 8 return means distributed at the circumference of the ring body.

More precisely, the ring body 1 comprises two through-holes 8, each having a first shoulder 9. The return means 7 comprise a bolt 10 inserted in each through-hole 8, and a compression spring 11 surrounding the bolt. The compression spring 11 is rests on the first shoulder 9. The bolt 10 comprises a head 10a and a pin 10b. The pin 10b crosses the through-hole 8 and has a threaded end screwed in a threaded bore of the annular piston 5 so that the bolt 10 moves with the annular piston 5. The compression spring 11 and the bolt 10 are arranged so that, when the annular piston 5 is in end position, the compression spring 11 is compressed between the first shoulder 9 and the bolt head 10a, thereby causing an axial inward force on the annular piston 5.

In this manner, the annular piston 5 is put back by the compression springs 11 in the annular groove 2 without using hand force.

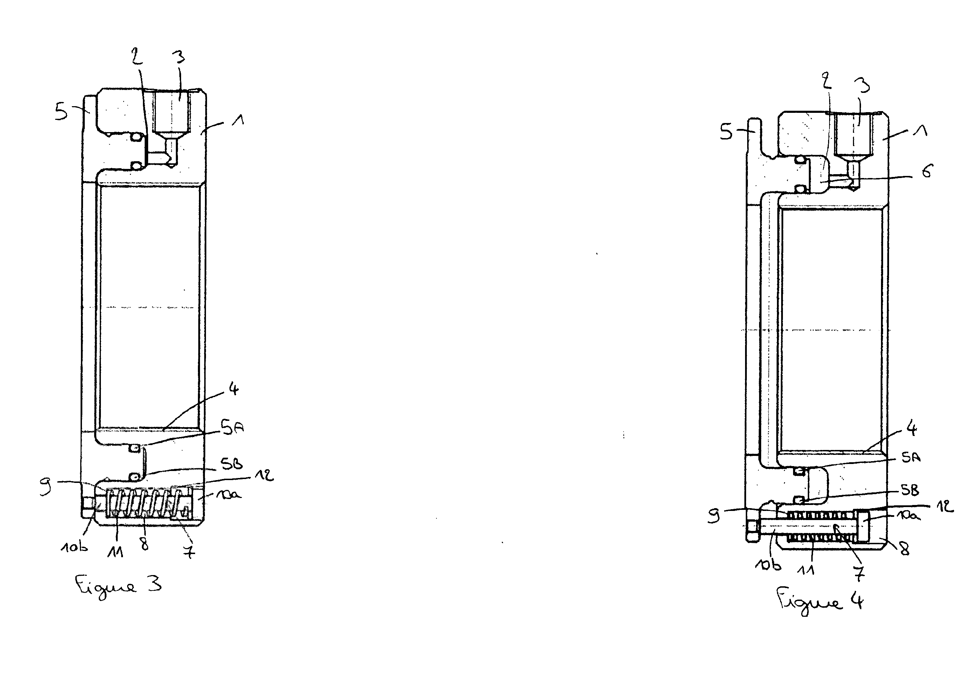

The functioning of the compression spring will become more clearly apparent with reference to figures 3 and 4.

When the annular piston 5 is fully retracted in the annular groove 4, as shown in figure 3, the compression spring 11 is fully extended, so that no substantive force is exerted by the compression spring on the annular piston.

When the annular piston 5 is in end position, as shown in figure 4, the bolt 10 is urged outwards by the annular piston so that the compression spring 11 is compressed between the first shoulder 9 and the bolt head 10a, thereby causing an axial inward force on the bolt head 10b. As long as the pressure chamber 6 is filled with the pressure fluid, nothing will happen. But as soon as the pressure is released, this axial inward force urges the annular piston 3 back into the annular groove 2 without requiring hand force.

Advantageously, the through-hole 8 comprises a second shoulder 12 for stopping the bolt head 10a.

The hydraulic nut according to the invention further comprises adapters 13 for test gauges for controlling the motion of the ring member on the elongated member and the distance between the annular piston and the ring body. Preferably, several test gauges are distributed at the periphery of the ring body.

The outer surface 14 of the ring body is knurled in two directions for good handling and the complete surface of the hydraulic nut is nitro-carbonized to increase the surface hardness of the annular piston and protect all parts against corrosion.

Hereinafter, the use of the hydraulic nut will be described in the case of the mounting of spherical roller bearing on an adapter sleeve.

Firstly, the ring body is screwed on the end of the adapter sleeve so that the ring body is rigidly secured to the adapter sleeve. In this position, the annular piston is fully retracted into the annular groove whereby the front surface of the piston projects out from the annular groove and abuts against the bearing to be mounted on the adapter sleeve.

In a second step, some pressure fluid, for example some oil, is injected under pressure through the hydraulic inlet into the pressure chamber, thereby urging the annular piston outwardly. The annular piston applies a mounting force on the bearing and enables the mounting of the bearing on the adapter sleeve. This mounting, and more specifically the mounting force and the motion of the bearing, can be monitored and controlled by one or more test gauges.

While the annular piston is urged outwardly, the bolt is urged outwards with the piston, thereby compressing the compression spring between the first shoulder and the bolt head.

When the bearing is mounted on the adapter sleeve, the oil pressure is released and the compression spring applies an axial inward force on the bolt thereby urging the piston back into the groove.

This hydraulic nut automatically retracts the annular piston in the annular groove without using hand force.

The invention is not limited to the embodiment shown in the accompanying drawings.

For example, the hydraulic nut can include more than two return means, for example it can include four returns means split all around the ring body circumference. In that case, the return means are angularly equipositioned.

More generally, any return means can be used. For example, instead of a bolt surrounded with a spring, an elastic member can be used. This elastic member can be a traction elastic member which applies an axial force when it is extended or an compression elastic member which applies a force when it is compressed.

Moreover, the hydraulic nut can comprise more sensors in order to monitor and control the mounting force of the bearings on the shaft, e.g. the hydraulic nut may be provided with means to show the actual pressure and the actual preload during the mounting process.

## Claims

1. A hydraulic nut for mounting and dismounting a ring member on a elongated member, the hydraulic nut comprising:
- a ring body (1) provided with an annular groove (2) in one end face, an hydraulic inlet (3) and attaching means (4) for fixedly attaching the ring body (1) to the elongated member,
- an annular piston (5) received in the annular groove (2) for forming a pressure chamber (6) between the annular groove (2) and the annular piston (5), the annular piston being movable between a retracted position and an extended position protruding from the end face of the ring body (1), the hydraulic inlet (3) being in fluid communication with the pressure chamber (6), enabling the introduction of pressure fluid into the pressure chamber (6), thereby urging the annular piston (2) axially outwards,
the hydraulic nut being **characterized in that** it further comprises a return means (7) connected to the ring body (1) and to the annular piston (5) wherein the return means comprises at least one elastic member (10) for storing elastic potential energy when the annular piston is moved towards the extended position and for urging the annular piston (5) back towards the retracted position.

2. The hydraulic nut of claim 1, wherein the return means (7) comprises a traction spring comprising one end connected to the annular piston and the other end connected to the ring body.

3. The hydraulic nut of claim 1, wherein the ring body (1) further comprises a through-hole (8) provided with a first shoulder (9), the return means comprising at least one bolt (10) surrounded with a compression spring (11), the bolt (10) having a head (10a) and a pin (10b), the pin (10b) being connected to the annular piston (5) so that the bolt (10) moves with the annular piston (5), the compression spring (11) and the bolt (10) being arranged so that, when the annular piston (5) is urged outwardly, the compression spring (11) being compressed between the first shoulder (9) and the bolt head (10a).

4. The hydraulic nut of the preceding claim, wherein the through-hole (8) further comprises a second shoulder (12) for stopping the bolt head (10a).

5. The hydraulic nut of anyone of the preceding claims, wherein the return means comprises at least two elastic members (7).

6. The hydraulic nut of anyone of the preceding claims, wherein the ring body (1) is provided with knurl.

7. The hydraulic nut of the preceding claim, wherein the ring body (1) is provided with double knurl.

8. The hydraulic nut of anyone of the preceding claims, wherein the ring body surface (14) is nitro-carbonized.

9. The hydraulic nut of anyone of the preceding claims, wherein the attaching means (4) for fixedly attaching the ring body (1) to the elongated member comprises a thread on the internal surface of the ring body.
